# EUROPEAN PATENT SPECIFICATION

(11) **EP 2 849 414 B1**
(45) Date of publication and mention of the grant of the patent: **20.04.2022**
(21) Application number: 13877328.8
(22) Date of filing: 13.12.2013
(51) Int. Cl.: H04M 1/725, H04W 4/00, H04B 1/3827

(54) **DATA TRANSMISSION DEVICE AND DATA TRANSMISSION SYSTEM**
DATENÜBERTRAGUNGSVORRICHTUNG UND DATENÜBERTRAGUNGSSYSTEM
PROCÉDÉ DE TRANSMISSION DE DONNÉES ET SYSTÈME DE TRANSMISSION DE DONNÉES

(43) Date of publication of application: 18.03.2015
(73) Proprietor: Huawei Device Co., Ltd., Dongguan, Guangdong 523808 (CN)
(72) Inventor: CAI, Xupeng, Shenzhen Guangdong 518129 (CN); LIN, Huizhong, Shenzhen Guangdong 518129 (CN)
(74) Representative: Goddar, Heinz J.
(86) International application number: PCT/CN2013/089385
(87) International publication number: WO 2014/134948

(56) References cited:
- EP-A2- 1 758 353
- CN-A- 1 921 510
- CN-A- 102 025 820
- CN-U- 202 714 853
- CN-U- 202 907 143
- US-A1- 2006 025 074
- US-A1- 2013 154 826
- US-A1- 2013 331 153

## Description

### TECHNICAL FIELD

The present invention relates to the communications field, and in particular, to a data transmission device and a data transmission system.

### BACKGROUND

With the popularity of terminal devices, Bluetooth apparatuses are increasingly applied to various electronic products due to their convenient and secure signal transmission manners. A Bluetooth headset is a high-tech headset product that uses a short-distance radio communications technology, which can implement wirelessness of a headset and an earphone. A Bluetooth headset can be used to perform a call, provided that a mobile phone supports a Bluetooth technology. The user can use the Bluetooth headset to answer a call when it is inconvenient for the user to hold the mobile phone, thereby avoiding an accident that may occur, for example, when the user answers a call by holding a mobile phone while driving.

Currently, a Bluetooth headset is an external component that exists independent of a mobile phone, and it is inconvenient to carry the Bluetooth headset around. The Bluetooth headset needs to be put away when a user does not need to use it. When the user needs to use the Bluetooth headset urgently, the user needs to rummage in a bag for the Bluetooth headset, but may fail to find it due to a relatively small size of the Bluetooth headset; and the Bluetooth headset may also be easily lost due to its relatively small size. In addition, the Bluetooth headset has a single function, which is limited to answering a call.

In the prior art, to solve a problem that a Bluetooth headset may be easily lost, a Bluetooth module is integrated in a watch, which, however, implements only a function of hand-free calling. During a call, there is relatively large voice interference, and privacy of a caller cannot be protected. Meanwhile, the user needs to move the watch towards the mouth during the call, and it is easy to get tired; and when it is inconvenient for the user to move the arm, quality of the call is relatively poor and even it is impossible to perform a call, resulting in extremely low user experience.

EP 1 758 353 A2 discloses a wrist watch-type headset assembly for wireless communicating with a portable terminal. In the wrist watch-type headset assembly, a fixing of a predetermined shape includes a band to be worn around the wrist of the user and a headset having a wireless module such a Bluetooth module is detachably installed on the fixing body.

US 2013/331153 A1 discloses a wearable wireless speakerphone that can be worn by users on their bodies. The wireless speakerphone may include a PCB circuitry for hands-free connectivity with the Bluetooth protocol 4 or other advanced protocols. It may also include heart rate and blood pressure monitors, temperature, humidity control and other sensors.

US 2006/025074 A1 discloses a Bluetooth-based headset with an USB interface having USB connector and a charging unit connected to the battery.

US 2013/154826 A1 discloses a wearable signal notification article and a system incorporating the article. The system provides users with a way to stay connected to the wireless device, even when the user is not in proximity of the device.

### SUMMARY

The present invention provides a multifunctional data transmission device of claim 1 and a system of claim 13 that feature relatively good call experience and ease of carry.

According to an aspect of the present invention, a data transmission device is provided, and includes a holding part and a body part. The holding part and the body part are connected in a movable manner; the holding part is fastened to or worn by a user; and the body part includes a Bluetooth communication module and a monitoring module, where the monitoring module is configured to perform at least one of the following operations: sports monitoring, sleep quality monitoring, environment monitoring, and physical sign monitoring, and obtain a monitoring result; the Bluetooth communication module is configured to establish a Bluetooth communication connection with a terminal device, and one end of the holding part is designed as a the universal serial bus USB interface.

Further aspects of the invention are set out in the dependent claims.

It can be seen from the foregoing technical solutions that the embodiments of the present invention have the following advantages:

The embodiments of the present invention includes the following: a body part and a holding part are connected in a movable manner; the holding part is fastened to or worn by a user; the body part includes a monitoring module that is configured to perform at least one of the following operations: sports monitoring, sleep quality monitoring, environment monitoring, and physical sign monitoring, and the monitoring module may obtain a monitoring result; and the body part further includes a Bluetooth communication module that is configured to establish a Bluetooth communication connection with a terminal device. When a user needs to use the body part to establish a Bluetooth communication connection with the terminal device, the user may remove the body part and put it in an ear to perform a call. When the user does not need to use the body part, the user can put the body part back in the holding part, and fasten or put on the holding part, thereby ensuring quality of the call, and facilitating carry for the user. The body part is a multifunctional data transmission device that can not only establish a Bluetooth communication connection with the terminal device, but also provide various monitoring functions.

### BRIEF DESCRIPTION OF DRAWINGS

To describe the technical solutions in the embodiments of the present invention more clearly, the following briefly introduces the accompanying drawings required for describing the embodiments.
FIG. 1 is a schematic diagram of a data transmission device according to an embodiment of the present invention;
FIG. 2 is a structural diagram of a body part according to an embodiment of the present invention;
FIG. 3 is a schematic diagram of connection of a data transmission device according to an embodiment of the present invention;
FIG. 4 is a schematic diagram of connection of a data transmission device according to another embodiment of the present invention;
FIG. 5 is a schematic diagram of connection of a data transmission device according to another embodiment of the present invention;
FIG. 6 is a structural diagram of a data transmission system according to an embodiment of the present invention; and
FIG. 7 is a flowchart of a data transmission method.

### DESCRIPTION OF EMBODIMENTS

The following clearly and completely describes the technical solutions in the embodiments of the present invention with reference to the accompanying drawings in the embodiments of the present invention.

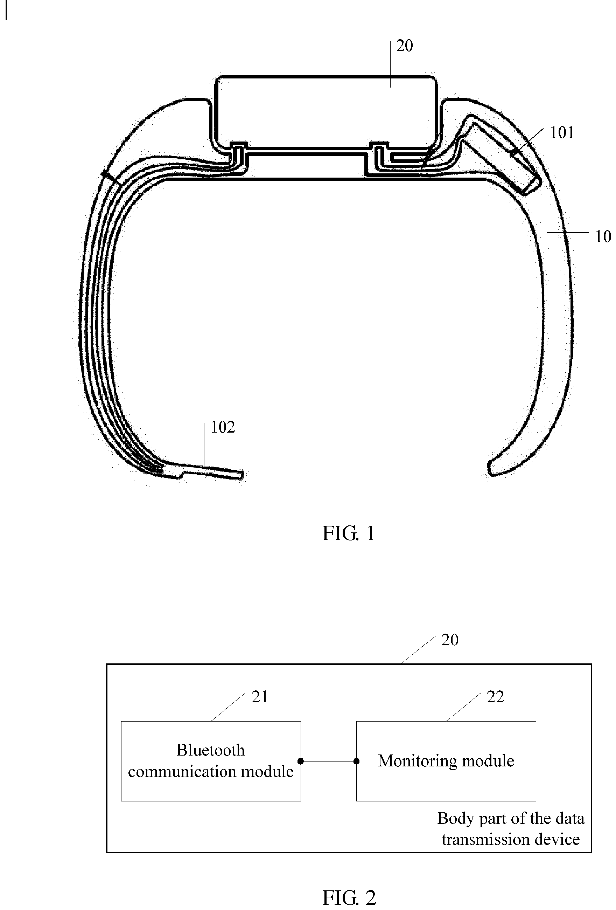

The present invention provides a multifunctional data transmission device that features relatively good call experience and ease of carry, and further provides a data transmission system, which is described in detail in the following. For details, reference may be made to FIG. 1 to FIG. 7.

### Embodiment 1

This embodiment of the present invention provides a multifunctional data transmission device that features relatively good call experience and ease of carry. FIG. 1 is a schematic diagram of the data transmission device according to this embodiment of the present invention, and FIG. 2 is a structural diagram of a body part of the data transmission device according to this embodiment of the present invention. As shown in FIG. 1 and FIG. 2, the data transmission device may specifically include:
a holding part 10 and a body part 20. The body part 20 and the holding part 10 are connected in a movable manner; the holding part 10 is fastened to or worn by a user; and the body part 20 includes a Bluetooth communication module 21 and a monitoring module 22, where the monitoring module 22 is configured to perform at least one of the following operations: sports monitoring, sleep quality monitoring, environment monitoring, and physical sign monitoring, and obtain a monitoring result; and the Bluetooth communication module 21 is configured to establish a Bluetooth communication connection with a terminal device.

The body part of the data transmission device in this embodiment is a multifunctional data transmission device that can not only establish a Bluetooth communication connection with a terminal device, but also provide various monitoring functions. The terminal device may specifically be a terminal device such as a mobile phone or a PAD.

Referring to FIG. 2, FIG. 2 is a structural diagram of the body part according to this embodiment of the present invention. The body part 20 in this embodiment includes the Bluetooth communication module 21 and the monitoring module 22. Specifically, a monitoring sensor can be integrated on a Bluetooth chip in the body part 20, so that the monitoring module 22 can perform monitoring such as sports monitoring, sleep quality monitoring, environment monitoring, and physical sign monitoring. For example, the monitoring may be specifically as follows:
sports monitoring: monitoring of step counting, calorie counting, and distance counting, and so on;
sleep quality monitoring: sleep quality;
environment monitoring: monitoring of a GPS track, an altitude, atmospheric pressure, a direction, temperature and humidity, an ultraviolet ray, and so on; and
physical sign monitoring: monitoring of a heart rate, a body temperature, an electrocardiogram, and so on.

The data transmission device in this embodiment of the present invention not only provides a Bluetooth function, but also provides the foregoing monitoring functions. For a user, possessing a data transmission device equals to possessing at a same time a Bluetooth headset, a sports bracelet, a compass, a thermometer, a pedometer, and so on, which greatly improves user experience. For example, when the user is running, the user can not only use the data transmission device to count the number of distance and record a track, but also put a body part of the data transmission device in an ear to perform a call, which facilitates answering the call. For example, when the user is traveling, the user may use the data transmission device to monitor an atmospheric pressure value and an altitude, and may also use the data transmission device as a compass, which adds pleasure and convenience to a journey and improves user experience.

The Bluetooth communication module 21 may establish the Bluetooth communication connection with the terminal device, which may specifically include establishing a call connection, an SMS message connection, or the like. For example, when a mobile phone is called, the Bluetooth communication module 21 can receive information about this call; and the user may directly use the body part 20 instead of the mobile phone to answer the call.

The data transmission device may further include a display module. The display module can display communication data for establishing the Bluetooth communication connection between the Bluetooth communication module and the terminal device; and the user may directly query the communication data in real time on the data transmission device. Optionally, a light emitting diode (LED, Light Emitting Diode) may be disposed on the body part. The communication data for establishing the Bluetooth communication connection between the Bluetooth communication module and the terminal device may be displayed on the LED display screen in real time for the user to view.

The display module may be integrated on the holding part of the data transmission device, or may be integrated on the body part of the data transmission device.

Optionally, the display module may also be configured to display time, and used as a watch.

The data transmission device may further include a voice notification module. The voice notification module can notify, by using a voice, the communication data for establishing the Bluetooth communication connection between the Bluetooth communication module and terminal device; and play the communication data after the Bluetooth communication module establishes the Bluetooth communication connection with the terminal device. The user can obtain the communication data by using a real-time voice of the voice notification module.

The voice notification module may be integrated on the holding part of the data transmission device, or may be integrated on the body part of the data transmission device.

The foregoing communication data for establishing the Bluetooth communication connection between the Bluetooth communication module and terminal device includes at least one of the following items: call information, incoming call notification information, an SMS message, the monitoring result obtained by the monitoring module 22, and so on.

It should be noted that, the data transmission device may send the monitoring result obtained by the monitoring module 22 to the terminal device when the Bluetooth communication module 21 establishes the Bluetooth communication connection with the terminal device. The terminal device may send a control instruction to the Bluetooth communication module 21 according to the received monitoring result, thereby switching a monitoring task. Therefore, the communication data for establishing the Bluetooth communication connection between the Bluetooth communication module 21 and the terminal device may include the monitoring result obtained by the monitoring module 22.

In addition, the data transmission device may further include a vibration motor. When the Bluetooth communication module establishes the Bluetooth communication connection with the terminal device, the data transmission device may notify a user in a vibration manner. For example, when there is an incoming call on a mobile phone, the data transmission device may vibrate to notify the user to answer the call by using the body part.

According to another embodiment of the present invention, the Bluetooth communication module 21 is a dual-channel communication module, which may specifically include a Bluetooth 3.0 module and a Bluetooth 4.0 module. When receiving voice data from the terminal device, the body part establishes the Bluetooth communication connection with the terminal device by using the Bluetooth 3.0 module. When receiving non-voice data from the terminal device, the body part establishes the Bluetooth communication connection with the terminal device by using the Bluetooth 4.0 module. When the terminal device transmits the non-voice data, the Bluetooth 3.0 module is turned off, which may effectively reduce power consumption.

According to another embodiment of the present invention, the Bluetooth 4.0 module includes a Bluetooth low energy (BLE, Bluetooth Low Energy) module. When receiving the non-voice data from the terminal device, the body part establishes the Bluetooth communication connection with the terminal device by using the BLE module in the Bluetooth 4.0 module.

The BLE module is a short-range robust radio technology that features low costs and interoperability, and works in a license exempt 2.4GHz Industrial Scientific Medical (ISM) radio frequency band. The BLE module can reduce standby power consumption, implement a high-speed connection, and reduce peak power, which is specifically the following:
three aspects: reduction of standby power consumption, implementation of a high-speed connection, and reduction of peak power.

Reduction of standby power consumption: The Bluetooth 3.0 module uses 16 to 32 channels to perform broadcasting. However, the BLE module uses only three broadcast channels; and further, radio frequency is switched on for 0.6 to 1.2ms each time the BLE module broadcasts. Compared with that radio frequency of the Bluetooth 3.0 module is switched on for 22.5 ms, switched-on duration of the BLE module is reduced. In addition, the BLE module sends data at more intervals than the Bluetooth 3.0 module, where the intervals are increased to 0.5 to 4s. Therefore, radio frequency power consumption of the BLE module can almost be negligible, which effectively reduces power consumption.

Implementation of a high-speed connection: The BLE module allows a device that is performing broadcasting to be connected to a scanning device, which effectively avoids repeated scanning. Completing of a process of establishing a connection with a device on which a BLE module is disposed can be controlled within 3ms; at a same time, a linker is quickly started as an application program; and the connection is immediately disconnected after data transfer is completed within several milliseconds. For the Bluetooth 3.0 module, however, even establishing only a link at a link layer takes at least 100ms; and time for establishing a link at a logical link control and adaptation protocol (L2CAP, Logical Link Control and Adaptation Protocol) layer is longer.

Reduction of peak power: The BLE module defines a length of a data packet more strictly, supports encapsulation of very short data (8 to 27Byte), uses a random radio frequency parameter, and adds a Gaussian frequency-shift keying (GSFK) modulation index, which minimizes data transceiving complexity. In addition, by adding a modulation index and using a 24-bit cyclic redundancy check (CRC)code, it is ensured that the encapsulation has higher stability in case of interference, so that a radio range of the BLE module increases to over 100m. Peak power is effectively reduced by using the foregoing techniques in combination with a frequency hopping principle of the Bluetooth 3.0 module.

FIG. 1 is a schematic diagram of the data transmission device according to this embodiment of the present invention. As shown in FIG. 1, for convenience of charging the body part, one end of the holding part 10 is designed as a universal serial bus (USB, Universal Serial Bus) interface 102. The USB interface 102 can charge the body part 20 after the USB interface 102 is connected to a terminal such as a computer or a USB accessory, so that a user does not need to bring an extra charging device to complete charging the body part.

In addition, the data transmission device may further perform data synchronization with a terminal such as a computer via the USB interface 102. For example, communication data for establishing a Bluetooth communication connection between the Bluetooth communication module 21 and a mobile phone can be transmitted to the computer via the USB interface 102; where the communication data includes, for example, call information, incoming call notification information, an SMS message, the monitoring result obtained by the monitoring module 22, and so on. The USB interface may also transmit data, such as software, in a mobile phone to the computer, and perform an operation such as software upgrade on the mobile phone by using the computer; that is, the holding part 10 may function as a data line.

Specifically, a metal contact is disposed at a joint between the body part 20 and the holding part 10. An electrical connection between the body part and the USB interface 102 is implemented by using the metal contact.

In addition, a battery 101 may further be disposed on the holding part 10, and the battery 101 may charge the body part 20. The USB interface 102 on the holding part 10 may also charge the battery 101, so that the battery 101 has a function of a mobile power source. When a user goes traveling and cannot charge the body part, the battery 101 can be used to charge the body part 20, which improves user experience.

Optionally, the holding part 10 in this embodiment may be in a wrist strap shape or a watchband shape, which is not limited. A user may wear the data transmission device on a wrist, which facilitates use and carry; and the data transmission device is not easily lost. When the user wears the data transmission device on the wrist, the data transmission device is also decorative, thereby improving user experience.

Referring to FIG. 1, FIG. 1 is a schematic diagram of the data transmission device according to this embodiment of the present invention. The holding part 10 may hold the body part 20. The holding part 10 and the body part 20 are connected in a movable manner. A battery 101 that supplies power to the body part 20 is disposed on the holding part 10. One end of the holding part 10 is designed as the USB interface 102. The USB interface 102 may charge the body part 20. A mobile phone or the data transmission device may upload communication data to a computer via the USB interface 102, or control, such as software upgrade, of the mobile phone may be implemented via the USB interface 102.

The holding part 10 and the body part 20 of the data transmission device in this embodiment are connected in a movable manner, and the body part 20 can be connected to the holding part10 in a pluggable manner. For example, the holding part 10 and the body part 20 can be connected by using a fastener, or be movably connected in a magnetic manner. When a user needs to use the body part 20 to perform a call, the user can remove the body part 20 and put it in an ear to make the call; and when the user does not need use the body part 20, the user can put the body part 20 back to the holding part 10, which both ensures quality of the call and facilitates carry for the user.

That the holding part 10 and the body part 20 are connected in a movable manner by using a fastener may specifically be as follows:

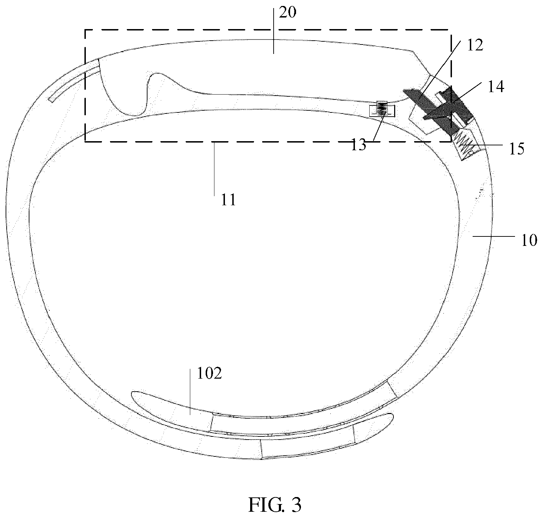

Referring to FIG. 3, FIG. 3 is a schematic diagram of connection of the data transmission device according to this embodiment of the present invention. The holding part 10 includes a cavity 11, and the body part 20 is located in the cavity 11 of the holding part 10.

A movable fastener 12, a compressed spring 13, and a button 14 used for pressing the movable fastener 12 are disposed at one end of the cavity 11. One end of the body part 20 is connected to the other end of the cavity 11 in a movable manner; and the other end of the body part 20 is fastened by the movable fastener 12, and the movable fastener 12 retracts when the button 14 is pressed so that the body part 20 ejects under an action of an elastic force of the compressed spring 13, and a user takes out the body part and put it in an ear to perform a call.

Optionally, the movable fastener 12 may be connected to the holding part 10 by using an elastic spring 15. When the button 14 is pressed down, the movable fastener 12 retracts, and the end, which is connected to the movable fastener 12, of the body part 20 ejects under the elastic force of the compressed spring 13. Then, the user can conveniently remove the body part 20 to perform a call. After the call, the user can plug in the body part 20 from a left side of the data transmission device when the data transmission device is placed in a direction shown in FIG. 3 to be held by one end of the cavity, and press the end, which is connected to the movable fastener 12, of the body part 20, so that the body part 20 and the movable fastener are fastened, and the body part 20 is placed in the cavity 11 of the holding part 10.

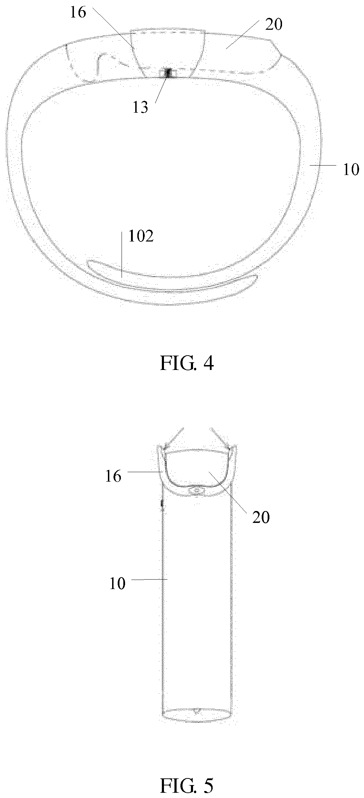

Referring to FIG. 4 or FIG. 5, FIG. 4 is a front view of the data transmission device according to another embodiment of the present invention, and FIG. 5 is a left view of the data transmission device according to the another embodiment of the present invention. The holding part 10 includes a clamp-shaped spring apparatus 16. The spring apparatus may clamp the body part 20.

In another embodiment of the present invention, the compressed spring 13 may be disposed on the holding part 10 and is used to eject the body part 20 when the spring apparatus 16 is pressed.

For a specific shape of the spring apparatus 16, reference may be made to FIG. 4 or FIG. 5. The clamp-shaped spring apparatus 16 is immovably disposed on the holding part 10. The spring apparatus 16 includes two clamping pieces; and the two clamping pieces may clamp the body part 20. When a user needs to use the body part 20, the user uses fingers to push the two clamping pieces outwards, that is, a position indicated by arrows in FIG. 5, so that the compressed spring 13 ejects the body part 20, and the user can remove the body part 20. After use, the user forcibly pushes the body part 20 back between the two clamping pieces of the spring apparatus 16, that is, the position indicated by the arrows in FIG. 5; and the body part 20 is embraced and clamped by the spring apparatus 16.

It can be known from above that the data transmission device in this embodiment of the present invention includes the following: a body part and a holding part are connected in a movable manner; the holding part is fastened to or worn by a user; the body part includes a monitoring module that is configured to perform at least one of the following operations: sports monitoring, sleep quality monitoring, environment monitoring, and physical sign monitoring, and the monitoring module may obtain a monitoring result; and the body part further includes a Bluetooth communication module that is configured to establish a Bluetooth communication connection with a terminal device. When a user needs to use the body part to establish a Bluetooth communication connection with the terminal device, the user may remove the body part and put it in an ear to perform a call. When the user does not need to use the body part, the user can put the body part back in the holding part, and fasten or put on the holding part, thereby ensuring quality of the call, and facilitating carry for the user. Further, the body part is a multifunctional data transmission device that can not only establish a Bluetooth communication connection with the terminal device, but also provide various monitoring functions. By monitoring a physical sign of a human body and an external environment, a personalized and customized service is provided to the user, thereby improving user experience.

### Embodiment 2

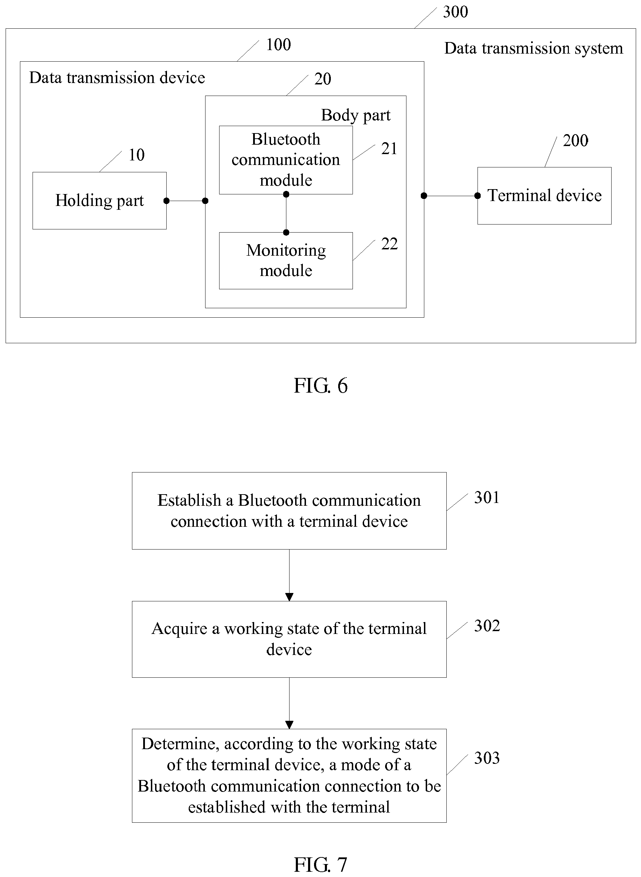

To better understand the foregoing solutions, this embodiment provides a data transmission system. FIG. 6 is a structural diagram of the data transmission system according to this embodiment of the present invention. Referring to FIG. 6, the data transmission system is specifically as follows:

A data transmission system 300 includes: a data transmission device 100 and a terminal device 200.

The data transmission device 100 includes a holding part 10 and a body part 20. The holding part 10 and the body part 20 are connected in a movable manner; the holding part 10 is fastened to or worn by a user; the body part 20 includes a Bluetooth communication module 21 and a monitoring module 22, where the monitoring module 22 is configured to perform at least one of the following operations: sports monitoring, sleep quality monitoring, environment monitoring, and physical sign monitoring, and obtain a monitoring result; and the Bluetooth communication module 21 is configured to establish a Bluetooth communication connection with the terminal device 200.

The terminal device 200 is configured to establish a Bluetooth communication connection with the data transmission device 100.

After the terminal device 200 and the Bluetooth communication module 21 are connected, the Bluetooth communication module 21 may send the monitoring result obtained by the monitoring module 22 to the terminal device 200. Therefore, communication data for establishing the Bluetooth communication connection between the terminal device 200 and the data transmission device 100 includes at least one of the following items: call information, incoming call notification information, an SMS message, and the monitoring result obtained by the monitoring module 22.

Optionally, the terminal device 200 may display the foregoing communication data for establishing the Bluetooth communication connection between the Bluetooth communication module 21 and the terminal device 200.

It should be noted that, for detailed implementation of the data transmission device 100, reference may be made to the foregoing embodiment; and details are not described herein again.

The present invention provides a data transmission system 300 that integrates a data transmission device 100 and a terminal device 200. When a user needs to perform a call, the user can remove a body part 20 in the data transmission device 100 and put it in an ear to make the call; and when the user does not need to use the body part 20, the user can put it back in the holding part 10, and fasten or put on the holding part 10, which both ensures quality of the call and facilitates carry for a user, thereby improving user experience. Further, the data transmission system 300 is a multifunctional data transmission system that also provides multiple monitoring functions. By monitoring a physical sign of a human body and an external environment, a personalized and customized service is provided to the user, thereby improving user experience.

FIG. 7 is a flowchart of the data transmission method. Referring to FIG. 7, the following steps may specifically be included:
301: Establish a Bluetooth communication connection with a terminal device.
302: Acquire a working state of the terminal device.
303: Determine, according to the working state of the terminal device, a mode of a Bluetooth communication connection to be established with the terminal device.

A Bluetooth communication connection mode includes a Bluetooth 3.0 mode and a Bluetooth 4.0 mode.

Then, in step 301, establishing the Bluetooth communication connection with the terminal device specifically includes: establishing the Bluetooth communication connection with the terminal device by using the Bluetooth 3.0 mode.

Then, in step 303, determining, according to the working state of the terminal device, the mode for establishing the Bluetooth communication connection with the terminal device includes: when receiving non-voice data from the terminal device, establishing the Bluetooth communication connection with the terminal device by using the Bluetooth 4.0 mode; and when receiving voice data from the terminal device, establishing the Bluetooth communication connection with the terminal device by using the Bluetooth 3.0 mode.

It should be noted that, the Bluetooth 4.0 mode includes a Bluetooth low energy BLE mode. When the terminal device transmits the non-voice data, the Bluetooth communication connection with the terminal device is established by using the low energy BLE mode in the Bluetooth 4.0 mode.

It should be noted that, to better reduce power consumption, when the terminal device transmits the non-voice data, the Bluetooth 3.0 mode is turned off, and only the BLE mode is used to perform a communication connection with the terminal device.

Specifically, when the terminal device transmits the non-voice data, a body part establishes a Bluetooth communication connection with the terminal device by using the BLE mode. When the terminal device transmits the voice data, the Bluetooth 3.0 mode is turned on, so that the body part establishes the Bluetooth communication connection with the terminal device by using the Bluetooth 3.0 mode; after the voice data is transmitted, the Bluetooth 3.0 mode is turned off, and only the BLE mode is used to establish the communication connection, which effectively reduces power consumption.

Data transmission methods are flexibly switched, which reduces communication power consumption of a data transmission device and provides a better user experience to a user.

The data transmission device and the data transmission system provided by the present invention are introduced in detail in above. In this specification, specific examples are used to describe the principle and implementation manners of the present invention.

## Claims

1. A data transmission device (100), comprising a holding part (10) and a body part (20); wherein
the holding part (10) and the body part (20) are connected in a movable manner; and the holding part (10) is fastened to or worn by a user; and
the body part (20) comprises a Bluetooth communication module (21) and a monitoring module (22), wherein the monitoring module (22) is configured to perform at least one of the following operations: sports monitoring, sleep quality monitoring, environment monitoring, and physical sign monitoring, and obtain a monitoring result;
the Bluetooth communication module (21) is configured to establish a Bluetooth communication connection with a terminal device (200); and
one end of the holding part (10) is designed as a universal serial bus, USB, interface (102).

2. The data transmission device (100) according to claim 1, wherein
the Bluetooth communication module (22) is a dual-channel communication module, comprising a Bluetooth 3.0 module and a Bluetooth 4.0 module; wherein
when receiving voice data from the terminal device (200), the body part (20) establishes the Bluetooth communication connection with the terminal device (200) by using the Bluetooth 3.0 module; and
when receiving non-voice data from the terminal device (200), the body part (20) establishes the Bluetooth communication connection with the terminal device (200) by using the Bluetooth 4.0 module.

3. The data transmission device (100) according to claim 2, wherein the Bluetooth 4.0 module comprises a Bluetooth low energy, BLE, module; and
when receiving the non-voice data from the terminal device (200), the body part establishes the Bluetooth communication connection with the terminal device by using the BLE module.

4. The data transmission device (100) according to any one of claims 1 to 3, wherein the holding part (10) is a wrist strap.

5. The data transmission device (100) according to any one of claims 1 to 4, wherein
a battery is disposed on the holding part (10), wherein the battery is used to supply power to the body part (10).

6. The data transmission device (100) according to claim 5, wherein the USB interface (102) is configured to charge the battery.

7. The data transmission device according to any one of claims 1 to 6, wherein the USB interface (102) is configured to charge the body part.

8. The data transmission device (100) according to any one of claims 6 or 7, wherein the USB interface (102) is further configured to transmit communication data for establishing the Bluetooth communication connection between the Bluetooth communication module (21) and the terminal device (200).

9. The data transmission device (100) according to any one of claims 1 to 8, wherein the data transmission device further comprises: a display module; wherein
the display module is configured to display the communication data for establishing the Bluetooth communication connection between the Bluetooth communication module (21) and the terminal device (200).

10. The data transmission device (100) according to claim 9, wherein the display module is further configured to display time.

11. The data transmission device (100) according to any one of claims 1 to 10, wherein the data transmission device further comprises: a voice notification module; wherein
the voice notification module is configured to notify, by using a voice, the communication data for establishing the Bluetooth communication connection between the Bluetooth communication module and the terminal device.

12. The data transmission device (100) according to any one of claims 9 to 11, wherein
the holding part (10) comprises a clamp-shaped spring apparatus, which is configured to clamp the body part.

13. A data transmission system (300), comprising: a data transmission device (100) according to claim 1 and a terminal device (200), wherein
the terminal device (200) is configured to establish a Bluetooth communication connection with the data transmission device (100).

14. The data transmission system (300) according to claim 13, wherein the terminal device (200) is configured to display communication data for establishing the Bluetooth communication connection between the Bluetooth communication module (21) and the terminal device (200).

15. The data transmission system (300) according to claim 14, wherein the communication data comprises at least one of the following items: call information, incoming call notification information, an SMS message, and the monitoring result.

## Patentansprüche

1. Datenübertragungsvorrichtung (100), die ein Halteteil (10) und ein Körperteil (20) umfasst; wobei
das Halteteil (10) und das Körperteil (20) auf bewegliche Weise verbunden sind; und das Halteteil (10) an einem Benutzer befestigt oder durch diesen getragen wird; und
das Körperteil (20) ein Bluetooth-Kommunikationsmodul (21) und ein Überwachungsmodul (22) umfasst, wobei das Überwachungsmodul (22) konfiguriert ist, um folgende Vorgänge durchzuführen: Sportüberwachung, Schlafqualitätsüberwachung, Umgebungsüberwachung und/oder Körperzeichenüberwachung, und ein Überwachungsergebnis zu erhalten;
das Bluetooth-Kommunikationsmodul (21) konfiguriert ist, um eine Bluetooth-Kommunikationsverbindung mit einem Endgerät (200) herzustellen; und
ein Ende des Halteteils (10) als eine universelle Serienbus(USB)-Schnittstelle (102) ausgebildet ist.

2. Datenübertragungsvorrichtung (100) nach Anspruch 1, wobei
das Bluetooth-Kommunikationsmodul (22) ein Zweikanal-Kommunikationsmodul ist, das ein Bluetooth 3.0-Modul und ein Bluetooth 4.0-Modul umfasst; wobei
wenn Sprachdaten von dem Endgerät (200) empfangen werden, das Körperteil (20) die Bluetooth-Kommunikationsverbindung mit dem Endgerät (200) durch Verwenden des Bluetooth 3.0-Moduls herstellt; und
wenn Nicht-Sprachdaten von dem Endgerät (200) empfangen werden, das Körperteil (20) die Bluetooth-Kommunikationsverbindung mit dem Endgerät (200) durch Verwenden des Bluetooth 4.0-Moduls herstellt.

3. Datenübertragungsvorrichtung (100) nach Anspruch 2, wobei das Bluetooth 4.0-Modul ein Bluetooth-Low-Energy(BLE)-Modul umfasst; und
wenn die Nicht-Sprachdaten von dem Endgerät (200) empfangen werden, das Körperteil die Bluetooth-Kommunikationsverbindung mit dem Endgerät durch Verwenden des BLE-Moduls herstellt.

4. Datenübertragungsvorrichtung (100) nach einem der Ansprüche 1 bis 3, wobei das Halteteil (10) ein Armband ist.

5. Datenübertragungsvorrichtung (100) nach einem der Ansprüche 1 bis 4, wobei
eine Batterie an dem Halteteil (10) angeordnet ist, wobei die Batterie verwendet wird, um dem Körperteil (10) Strom zuzuführen.

6. Datenübertragungsvorrichtung (100) nach Anspruch 5, wobei die USB-Schnittstelle (102) konfiguriert ist, um die Batterie aufzuladen.

7. Datenübertragungsvorrichtung nach einem der Ansprüche 1 bis 6, wobei die USB-Schnittstelle (102) konfiguriert ist, um das Körperteil aufzuladen.

8. Datenübertragungsvorrichtung (100) nach einem der Ansprüche 6 oder 7, wobei
die USB-Schnittstelle (102) ferner konfiguriert ist, um Kommunikationsdaten zum Herstellen der Bluetooth-Kommunikationsverbindung zwischen dem Bluetooth-Kommunikationsmodul (21) und dem Endgerät (200) zu übertragen.

9. Datenübertragungsvorrichtung (100) nach einem der Ansprüche 1 bis 8, wobei die Datenübertragungsvorrichtung ferner Folgendes umfasst: ein Anzeigemodul; wobei
das Anzeigemodul konfiguriert ist, um die Kommunikationsdaten zum Herstellen der Bluetooth-Kommunikationsverbindung zwischen dem Bluetooth-Kommunikationsmodul (21) und dem Endgerät (200) anzuzeigen.

10. Datenübertragungsvorrichtung (100) nach Anspruch 9, wobei das Anzeigemodul ferner konfiguriert ist, um Zeit anzuzeigen.

11. Datenübertragungsvorrichtung (100) nach einem der Ansprüche 1 bis 10, wobei die Datenübertragungsvorrichtung ferner Folgendes umfasst: ein Sprachbenachrichtigungsmodul; wobei
das Sprachbenachrichtigungsmodul konfiguriert ist, um durch Verwenden von Sprache die Kommunikationsdaten zum Herstellen der Bluetooth-Kommunikationsverbindung zwischen dem Bluetooth-Kommunikationsmodul und dem Endgerät zu benachrichtigen.

12. Datenübertragungsvorrichtung (100) nach einem der Ansprüche 9 bis 11, wobei
das Halteteil (10) eine klemmenförmige Federeinrichtung umfasst, die konfiguriert ist, um das Körperteil zu klemmen.

13. Datenübertragungssystem (300), das Folgendes umfasst: eine Datenübertragungsvorrichtung (100) nach Anspruch 1 und ein Endgerät (200), wobei
das Endgerät (200) konfiguriert ist, um eine Bluetooth-Kommunikationsverbindung mit der Datenübertragungsvorrichtung (100) herzustellen.

14. Datenübertragungssystem (300) nach Anspruch 13, wobei das Endgerät (200) konfiguriert ist, um Kommunikationsdaten zum Herstellen der Bluetooth-Kommunikationsverbindung zwischen dem Bluetooth-Kommunikationsmodul (21) und dem Endgerät (200) anzuzeigen.

15. Datenübertragungssystem (300) nach Anspruch 14, wobei die Kommunikationsdaten folgende Elemente umfassen: Anrufinformationen, Benachrichtigungsinformationen über eingehende Anrufe, eine SMS-Nachricht und/oder das Überwachungsergebnis.

## Revendications

1. Dispositif de transmission de données (100), comprenant une partie de maintien (10) et une partie de corps (20) ;
la partie de maintien (10) et la partie de corps (20) étant reliées de manière mobile ; et la partie de maintien (10) étant attachée sur ou portée par un utilisateur ; et
la partie de corps (20) comprenant un module de communication Bluetooth (21) et un module de surveillance (22), le module de surveillance (22) étant configuré pour effectuer au moins l'une des opérations suivantes : surveillance sportive, surveillance de la qualité du sommeil, surveillance de l'environnement, et surveillance de signe physique, et pour obtenir un résultat de surveillance ;
le module de communication Bluetooth (21) étant configuré afin d'établir une connexion de communication Bluetooth avec un dispositif terminal (200) ; et
une extrémité de la partie de maintien (10) étant conçue comme une interface de bus série universel, USB, (102).

2. Dispositif de transmission de données (100) selon la revendication 1, dans lequel
le module de communication Bluetooth (22) est un module de communication à double canal, comprenant un module Bluetooth 3.0 et un module Bluetooth 4.0 ;
lors de la réception de données vocales du dispositif terminal (200), la partie de corps (20) établissant la connexion de communication Bluetooth avec le dispositif terminal (200) à l'aide du module Bluetooth 3.0 ; et
lors de la réception de données non vocales du dispositif terminal (200), la partie de corps (20) établissant la connexion de communication Bluetooth avec le dispositif terminal (200) à l'aide du module Bluetooth 4.0.

3. Dispositif de transmission de données (100) selon la revendication 2, dans lequel le module Bluetooth 4.0 comprend un module Bluetooth à basse consommation, BLE ; et
lors de la réception des données non vocales du dispositif terminal (200), la partie de corps établissant la connexion de communication Bluetooth avec le dispositif terminal à l'aide du module BLE.

4. Dispositif de transmission de données (100) selon l'une quelconque des revendications 1 à 3, dans lequel la partie de maintien (10) est un bracelet.

5. Dispositif de transmission de données (100) selon l'une quelconque des revendications 1 à 4, dans lequel
une batterie est disposée sur la partie de maintien (10), la batterie étant utilisée pour fournir de l'énergie à la partie de corps (10).

6. Dispositif de transmission de données (100) selon la revendication 5, dans lequel l'interface USB (102) est configurée pour charger la batterie.

7. Dispositif de transmission de données selon l'une quelconque des revendications 1 à 6, dans lequel
l'interface USB (102) est configurée pour charger la partie de corps.

8. Dispositif de transmission de données (100) selon l'une quelconque des revendications 6 à 7, dans lequel
l'interface USB (102) est en outre configurée pour transmettre des données de communication afin d'établir la connexion de communication Bluetooth entre le module de communication Bluetooth (21) et le dispositif terminal (200).

9. Dispositif de transmission de données (100) selon l'une quelconque des revendications 1 à 8, dans lequel le dispositif de transmission de données comprend en outre : un module d'affichage ;
le module d'affichage étant configuré pour afficher les données de communication afin d'établir la connexion de communication Bluetooth entre le module de communication Bluetooth (21) et le dispositif terminal (200).

10. Dispositif de transmission de données (100) selon la revendication 9, dans lequel le module d'affichage est en outre configuré pour afficher l'heure.

11. Dispositif de transmission de données (100) selon l'une quelconque des revendications 1 à 10, dans lequel le dispositif de transmission de données comprend en outre : un module de notification vocale ;
le module de notification vocale étant configuré pour notifier, à l'aide d'une voix, les données de communication afin d'établir la connexion de communication Bluetooth entre le module de communication Bluetooth et le dispositif terminal.

12. Dispositif de transmission de données (100) selon l'une quelconque des revendications 9 à 11, dans lequel
la partie de maintien (10) comprend un appareil à ressort en forme de pince, qui est conçu pour serrer la partie de corps.

13. Système de transmission de données (300), comprenant : un dispositif de transmission de données (100) selon la revendication 1 et un dispositif terminal (200),
le dispositif terminal (200) étant configuré afin d'établir une connexion de communication Bluetooth avec le dispositif de transmission de données (100).

14. Système de transmission de données (300) selon la revendication 13, dans lequel le dispositif terminal (200) est configuré pour afficher des données de communication afin d'établir la connexion de communication Bluetooth entre le module de communication Bluetooth (21) et le dispositif terminal (200).

15. Système de transmission de données (300) selon la revendication 14, dans lequel les données de communication comprennent au moins l'un des éléments suivants : des informations d'appel, des informations de notification d'appel entrant, un message SMS et le résultat de la surveillance.
